# FASCICULE DE BREVET EUROPEEN

(11) **EP 1 170 118 B1**
(45) Date de publication et mention de la délivrance du brevet: **10.09.2003**
(21) Numéro de dépôt: 01420148.7
(22) Date de dépôt: 04.07.2001
(51) Int. Cl.: B32B 15/01, C22C 21/02, C22C 21/08, C22C 21/10

(54) **Tôles en alliage d'aluminium plaquées pour éléments de structure d'aéronefs**
Plattierte Bleche aus Aluminium-Legierung für Flugzeugstrukturelemente
Aluminium alloy plated sheets for structural aircraft elements

(30) Priorité: 05.07.2000 FR 0008738
(43) Date de publication de la demande: 09.01.2002
(73) Titulaire: Pechiney Rhenalu, 75116 Paris (FR)
(72) Inventeur: Dif, Ronan, 38590 Saint-Etienne de Saint-Geoirs (FR); Bes, Bernhard, 38180 Seyssins (FR); Lassince, Philippe, 63500 Issoire (FR); Ribes, Hervé, 63500 Issoire (FR)
(74) Mandataire: Mougeot, Jean-Claude

(56) Documents cités:
- WO-A-96/12829
- WO-A-98/28130
- GB-A- 1 004 868
- GB-A- 2 321 869
- US-A- 4 589 932
- US-A- 5 213 639
- US-A- 5 906 689
- PATENT ABSTRACTS OF JAPAN vol. 017, no. 052 (C-1022), 2 février 1993 (1993-02-02) -& JP 04 263033 A (FURUKAWA ALUM CO LTD), 18 septembre 1992 (1992-09-18)

## Description

### Domaine de l'invention

L'invention concerne des tôles en alliage d'aluminium de la série 6000 selon la nomenclature de l'Aluminum Association, plaquées à l'aide d'un autre alliage d'aluminium, destinées à la fabrication d'éléments de structure d'aéronefs, et notamment de panneaux de fuselage pour avions.

### Etat de la technique

Les fuselages des avions commerciaux sont réalisés pour la plupart à partir de tôles en alliage 2024, plaquées sur les deux faces d'un alliage d'aluminium peu chargé, par exemple un alliage 1050 ou 1070. L'épaisseur du placage par face peut représenter, selon l'épaisseur de la tôle d'âme, typiquement entre 1% et 15% de l'épaisseur totale. Le but de l'alliage de placage est d'abord d'être suffisamment résistant à la corrosion. On peut admettre une légère corrosion généralisée ou par piqûres, mais peu profonde de manière à ne pas atteindre l'alliage d'âme. Cette évaluation doit se faire sur la tôle plaquée traitée thermiquement à l'état d'utilisation, c'est-à-dire typiquement après mise en solution, trempe et éventuellement revenu, car les phénomènes de diffusion entre âme et placage au moment de la mise en solution peuvent altérer le comportement en corrosion du placage.

Le placage doit pouvoir également jouer le rôle de protection cathodique vis-à-vis de l'âme, c'est-à-dire qu'il doit exister une différence de potentiel électrochimique suffisante entre les deux couches. Cet effet protecteur joue en particulier dans le cas où une rayure vient à atteindre l'âme. Le placage peut avoir d'autres fonctions telles que la protection physique de l'alliage d'âme contre les rayures et les chocs, l'obtention d'une couche facile à polir, dans le cas où la compagnie aérienne souhaite un aspect métallique plutôt que peint, ou une meilleure aptitude aux traitements de surface, notamment l'usinage chimique et les divers prétraitements nécessaires pour l'application de revêtements polymères.

Depuis plusieurs années, on a proposé d'utiliser pour les panneaux de fuselage, à la place de l'alliage 2024 ou des alliages voisins, des alliages AlMgSi de la série 6000. Ces alliages, également à traitement thermique, présentent de bonnes caractéristiques mécaniques à l'état traité, un module d'élasticité élevé et une densité plus faible que celle du 2024. D'une façon générale, leur résistance à la corrosion est meilleure que celle du 2024. Les alliages de la série 6000 sont de plus facilement soudables, ce qui permettrait de réduire le nombre des assemblages rivetés, qui peuvent être une source de corrosion. Certains de ces alliages peuvent être utilisés sous forme de tôles non-plaquées, et en particulier dans des états métallurgiques spécialement désensibilisés à la corrosion intergranulaire. Un tel procédé de traitement thermique est décrit dans le brevet EP 0787217, au nom de la demanderesse, qui concerne un traitement de revenu particulier pour un alliage du type 6056, de manière à le désensibiliser à la corrosion intergranulaire, et à permettre ainsi son utilisation pour le fuselage des avions. Néanmoins, même dans cet état, l'alliage 6056 peut présenter encore une certaine sensibilité à la corrosion par piqûres. On peut donc être amené à préférer une tôle plaquée.

Le brevet US 4589932 (Alcoa) décrit l'utilisation, pour des éléments de structure d'avions, d'un alliage, enregistré ultérieurement sous la désignation 6013, de composition (% en poids) :
Si : 0,4 - 1,2 Mg : 0,5 - 1,3 Cu : 0,6 - 1,1 Mn : 0,1 - 1 Fe < 0,6.
Le brevet EP 0173632, au nom de la demanderesse, décrit un alliage, enregistré ultérieurement sous la désignation 6056, de composition (% en poids) :
Si : 0,9 - 1,2 Mg : 0,7 - 1,1 Cu : 0,3 - 1,1 Mn : 0,25 - 0,75
Zn : 0,1 - 0,7 Zr : 0,07 - 0,2 Fe < 0,3.
Le brevet FR 2704557, également au nom de la demanderesse, concerne des tôles plaquées pour fuselage comportant une âme en alliage 2000 ou en alliage 6000 contenant du cuivre, et un placage présentant par rapport à l'âme une différence de potentiel comprise entre 90 et 130 mV. L'alliage de placage est, de préférence, un alliage 6000 de composition (% en poids) :
Si : 0,15 - 0,6 Mg : 0,3 - 0,8 Cu < 0,1 Mn<0,4 Fe < 0,4.

Le manuel « Aluminum - Properties and Physical Metallurgy » publié par l'American Society for Metals sous la direction de J.E. Hatch (1984), pp. 301, 372 et 373, indique comme produits plaqués (« Alclad ») des produits utilisant comme placage les alliages de type 1000 ou l'alliage 7072 (alliage AlZn à environ 1% Zn) pour des âmes en alliage 2000 ; l'alliage 7072 est utilisé également pour les âmes en alliages 3003, 3004, 6061, 7075 et 7178. D'après la norme ASTM B209, on utilise également comme alliages de placage des alliages de la famille 6000 (2014 plaqué 6003) et d'autres alliages de type 7000 (tels que 7008 et 7011).

D'une manière générale, le manuel précité de Hatch recommande une différence de potentiel entre le placage et l'âme d'au moins 100 mV. Il existe toutefois des produits avec une différence de potentiel plus faible que 100 mV, tel que le produit Alclad 2014 (2014 T8 plaqué 6003) et le 2014 T8 plaqué 1050. Par ailleurs, l'expérience de l'homme de métier montre qu'il est préférable de limiter la différence de potentiel à une valeur d'environ 130 mV à 150 mV, afin d'éviter un trop grand risque de corrosion à l'assemblage entre les deux couches de métal. On considère ainsi qu'une différence de potentiel comprise entre environ 60 mV et 130 mV confère au produit plaqué un effet suffisant de protection cathodique.

Le but de la présente invention est de fournir une tôle pour fuselage en alliage de la famille 6000 permettant d'atteindre des propriétés d'usage comparables à celles du 2024, avec un placage assurant une résistance à la corrosion suffisante à l'état traité et une protection cathodique suffisante, sans toutefois qu'elle n'aille jusqu'à la disparition rapide de la couche de placage, ce qui irait à l'encontre de la protection recherchée. Il est souhaitable, par ailleurs, que l'alliage de placage soit choisi de telle manière que son placage sur l'alliage d'âme par colaminage se fasse sans trop de difficulté, qu'il ne contienne pas d'éléments gênants pour le recyclage des déchets de fabrication, et qu'il présente une résistance mécanique acceptable, pour ne pas détériorer celle de la tôle plaquée.

Un autre but de la présente invention est de proposer un procédé de fabrication pour un élément de structure d'avion incorporant ladite tôle plaquée qui permette de bénéficier au mieux des caractéristiques métallurgiques de cette tôle plaquée.

### Objet de l'invention

L'invention a pour objet une tôle plaquée sur une ou deux faces, constituée d'une tôle d'âme en alliage de composition (% en poids) :
- Si : 0,7 - 1,3: Mg : 0,6 - 1,2 (et de préférence 0,7 - 1,1)
- Cu : 0,5 - 1,1: Mn : 0,15 - 1,0 (et de préférence 0,3 - 0,7)
- Zn < 0,5: Fe < 0,5 (et de préférence < 0,3)
- Zr < 0,2: Cr < 0,25
autres éléments < 0,05 chacun et < 0,15 au total, reste aluminium,
et d'un placage en alliage d'aluminium sur au moins une face de la tôle, d'épaisseur par face comprise entre 1 à 15% (et de préférence 1,5 à 12%) de l'épaisseur totale, cet alliage de placage étant un alliage de type AlZn contenant de 0,25 à 0,7% (et de préférence de 0,3 à 0,6%) de zinc, moins de 0,40% de fer, moins de 0,40% (et de préférence moins de 0,25%) de silicium, moins de 0,10 % de cuivre, de manganèse, de magnésium, de titane ou de vanadium, et moins de 0,05% chacun et 0,15% au total pour les autres éléments, reste aluminium.

Un autre objet de l'invention est un élément de structure d'aéronef, tel qu'un panneau de revêtement de fuselage, comportant une tôle plaquée sur une ou deux faces constituée d'une tôle d'âme et d'un placage, la tôle d'âme et le placage ayant les compositions précitées.

Un autre objet de l'invention est un procédé de fabrication d'un élément de structure d'aéronef comportant :
a) la fabrication d'une tôle plaquée par laminage à chaud, constituée d'une tôle d'âme en alliage de composition (% en poids) :
   - Si : 0,7 - 1,3: Mg : 0,6 - 1,2 (et de préférence 0,7 - 1,1)
   - Cu : 0,5 - 1,1: Mn : 0,15 - 1,0 (et de préférence 0,3 - 0,7)
   - Zn < 0,5: Fe < 0,5 (et de préférence < 0,3)
   - Zr < 0,2: Cr < 0,25
   autres éléments < 0,05 chacun et < 0,15 au total, reste aluminium,
   et d'un placage en alliage d'aluminium sur au moins une face, d'une épaisseur par face comprise entre 1 à 15% (et de préférence 1,5 à 12%) de l'épaisseur totale, ce placage consistant sur au moins une face en un alliage AlZn contenant de 0,25 à 0,7% (et de préférence 0,3 à 0,6%) de zinc, moins de 0,40% de fer, moins de 0,40% et de préférence moins de 0,25%) de silicium, moins de 0,10% de cuivre, de manganèse, de magnésium, de titane ou le vanadium, autres éléments < 0,05% chacun et < 0,15% au total, reste aluminium, l'autre face pouvant être plaquée le cas échéant d'un deuxième alliage de placage, notamment d'un alliage de type 4000 ;
b) optionnellement une ou plusieurs passes de laminage à froid ;
c) une mise en solution suivie d'une trempe ;
d) optionnellement une ou plusieurs opérations de parachèvement tel que le défripage, le planage ou la traction contrôlée ;
e) optionnellement une mise en forme de la tôle ;
f) l'assemblage de l'élément de structure par rivetage de plusieurs tôles et soudage ou rivetage sur des raidisseurs ou cadres.
g) optionnellement le revenu de l'élément de structure.

### Description de l'invention

Toutes les compositions chimiques sont exprimées en % en poids, sauf indication contraire, et on applique les règles d'arrondissage de la norme européenne EN 573-3. Les états métallurgiques sont définis dans la norme européenne EN 515.

Les tôles en alliages de type 6000 suscitent de plus en plus d'intérêt pour la construction aéronautique. Plus précisément, le domaine de composition :
Si: 0,7-1,3 Mg : 0,6 - 1,2 Cu : 0,5 - 1,1 Mn : 0,15 - 1,0
Zn < 0,5 Fe<0,5 Zr<0,2 Cr < 0,25
autres éléments < 0,05 chacun et < 0,15 au total, reste aluminium,
qui englobe notamment l'alliage 6056, permet l'élaboration de tôles qui donnent des propriétés particulièrement avantageuses.

Pour les raisons exposées ci-dessus, ces tôles doivent être plaquées, l'épaisseur du placage se situant entre 1 et 15% de l'épaisseur totale de la tôle. La demanderesse s'est rendu compte qu'aucun des alliages de placage décrits dans la littérature ne donne satisfaction pour cette application. Selon l'invention, cet alliage de placage est un alliage de type AlZn contenant de 0,25 à 0,7% Zn, jusqu'à 0,40% de fer, jusqu'à 0,40% de silicium, et jusqu'à 0,10% de cuivre, de manganèse, de magnésium, de titane ou de vanadium, les autres éléments étant chacun < 0,05% et au total < 0,15%, le reste étant de l'aluminium.

Dans une réalisation préférentielle de l'invention, l'âme est constituée d'une tôle en alliage de composition (% en poids) :
Si : 0,7 - 1,3 Mg : 0,7 - 1,1 Cu : 0,5 - 1,1 Mn : 0,3 - 0,7
Zn<0,5 Fe<0,3 Zr<0,2 Cr < 0,25
autres éléments < 0,05 chacun et < 0,15 au total, reste aluminium,
et d'un placage en alliage d'aluminium sur au moins une face de la tôle, d'épaisseur par face comprise entre 1,5 à 12% de l'épaisseur totale, cet alliage de placage étant un alliage de type AlZn contenant de 0,3 à 0,6% Zn, jusqu'à 0,40% de fer, jusqu'à 0,25% de silicium, autres éléments < 0,05% chacun et < 0,15% au total. Il est avantageux que la taille de grains à mi-épaisseur dans l'âme soit inférieure à 250 µm et de préférence inférieure à 180 µm. L'épaisseur totale de la tôle est avantageusement comprise entre 1 mm et 10 mm. Afin d'obtenir pour la tôle qui constitue l'âme des caractéristiques mécaniques statiques particulièrement élevées, il est préférable de choisir une composition d'âme telle que la somme (Si + Mg + 3 Cu) > 3,50 % en poids, et encore plus préférentiellement > 3,65 % en poids.

Cette tôle plaquée, mise en solution, trempée et revenue, présente entre l'âme et l'alliage de placage une différence de potentiel électrochimique dans cet état final comprise entre 40 mV et 130 mV, de préférence entre 50 mV et 110 mV, et encore plus préférentiellement entre 60 mV et 100 mV.

Selon l'invention, la tôle en alliage 6000 peut être plaquée sur une ou deux faces avec une tôle de placage en alliage de type AlZn. Lorsque la tôle en alliage 6000 n'est plaquée que sur une seule face avec la tôle de placage en alliage de type AlZn, l'autre face peut soit rester nue, soit être plaquée avec une tôle d'un deuxième alliage de placage, et en particulier en alliage de type 4000, et plus spécialement en alliage 4043, 4045 ou 4047. Cette deuxième tôle de placage en alliage 4000 assure alors une fonction différente de celle de ladite tôle en alliage AlZn : ayant un point de fusion significativement plus bas de celui de la tôle qui forme l'âme, elle facilite le soudage de la tôle. L'épaisseur de ce deuxième placage est avantageusement comprise entre 1,5% et 12% de l'épaisseur totale de la tôle plaquée.

Les tôles selon l'invention peuvent subir avantageusement une ou plusieurs opérations de parachèvement tel que le défripage, le planage, ou la traction contrôlée. Les tôles plaquées selon l'invention peuvent être utilisées pour la fabrication d'un élément de structure d'aéronef. Un procédé de fabrication avantageux de cet élément de structure comporte les étapes suivantes :
a) la fabrication par laminage à chaud d'une tôle plaquée, constituée d'une tôle d'âme en alliage de composition (% en poids) :
   Si : 0,7 - 1,3 Mg: 0,6 - 1,2 (de préférence 0,7 - 1,1) Cu : 0,5 - 1,1
   Mn : 0,15 - 1,0 (de préférence 0,3 - 0,7)
   Zn < 0,5 Fe < 0,3 Zr < 0,2 Cr < 0,25
   autres éléments < 0,05 chacun et < 0,15 au total, reste aluminium,
   et d'un placage en alliage d'aluminium sur au moins une face, d'une épaisseur par face comprise entre 1 à 15% (et de préférence 1,5 à 12%) de l'épaisseur totale, ce placage consistant en un alliage AlZn contenant de 0,25 à 0,7% de zinc, jusqu'à 0,40% de fer, jusqu'à 0,40% de silicium, jusqu'à 0,10% de chacun des éléments cuivre, manganèse, magnésium, titane ou vanadium, autres éléments < 0,05% chacun et <0,15% au total, reste aluminium, l'autre face pouvant être plaquée le cas échéant d'un alliage différent, notamment un alliage de la série 4000;
b) optionnellement une ou plusieurs passes de laminage à froid, ce qui permet d'atteindre des épaisseurs plus faibles ;
c) une mise en solution suivie d'une trempe ;
d) optionnellement une ou plusieurs opérations de parachèvement tel que le défripage, le planage ou la traction contrôlée ;
e) optionnellement une mise en forme de la tôle ;
f) l'assemblage de l'élément de structure, notamment par rivetage de plusieurs tôles et soudage, ou rivetage sur des raidisseurs ;
g) éventuellement le revenu de l'élément de structure ainsi formé.

Avant la mise en place du ou des placage(s), la plaque coulée correspondant au matériau d'âme peut être homogénéisée, de préférence en deux paliers de température, le premier palier se situant entre 530 et 550°C, pour une durée comprise entre 1 et 8 h, et le second palier entre 555 et 575°C, pour une durée comprise entre 18 et 36 h.

La mise en forme de la tôle peut se faire avantageusement par étirage-formage, emboutissage, fluotournage ou pliage, ces techniques étant connues de l'homme de métier. Pour l'assemblage de l'élément de structure, toutes les techniques de rivetage et soudage connues et adaptées aux alliages d'aluminium conviennent. Les tôles peuvent être fixées sur les raidisseurs ou cadres par rivetage ou par soudage. Lorsque le soudage est choisi, la demanderesse a constaté qu'il est préférable d'utiliser des techniques de soudage à faible apport de chaleur qui assurent que la zone affectée thermiquement soit aussi réduite que possible. A ce titre, le soudage par laser et le soudage par friction donnent des résultats particulièrement satisfaisants. L'emploi d'un alliage de placage de la série 4000, et particulièrement d'un des alliages 4043, 4045 ou 4047 sur l'autre face de la tôle, facilite les opérations de soudage, en évitant par exemple l'emploi d'un alliage d'apport externe.

Les tôles selon l'invention, avant ou après formage, peuvent avantageusement être soumises à un traitement de revenu pour leur conférer de meilleures caractéristiques mécaniques statiques. Un traitement particulièrement adapté peut être effectué à une température comprise entre 170°C et 200°C pendant une durée allant de 1 h à 10 h. Ce traitement de revenu peut être effectué également et de façon avantageuse sur un élément de structure assemblé. Dans certains cas, un traitement de type T78, tel que celui décrit dans le brevet EP 0787217, destiné à désensibiliser l'alliage à la corrosion intergranulaire, peut être avantageux.

Un élément de structure selon l'invention, composé de tôles et de raidisseurs ou cadres, ces raidisseurs ou cadres étant constitués préférentiellement de profilés filés, peut être utilisé notamment dans la construction du fuselage d'un avion.

La demanderesse s'est aperçue que la tôle plaquée selon l'invention a des caractéristiques mécaniques statiques particulièrement favorables. En effet, dans les produits plaqués connus, la tôle de placage possède des valeurs de limite élastique et de résistance à la rupture faibles comparées avec celles de l'âme. Une tôle plaquée possède donc des caractéristique mécaniques statiques moins bonnes qu'une tôle non plaquée (appelée aussi tôle « nue ») de la même épaisseur totale et du même alliage et état métallurgique. Pour les tôles plaquées selon l'invention, cette baisse des caractéristiques mécaniques est très faible, ce qui favorise son application industrielle comme élément de structure d'aéronef, la limite élastique et la résistance à la rupture des tôles étant des caractéristiques qui entrent directement dans les calculs de dimensionnement des structures.

Le placage en alliage AlZn selon l'invention ne pose pas de problème particulier lors des opérations de traitement de surface ultérieurs, et notamment le polissage, l'usinage chimique ou les traitements destinés à améliorer l'adhérence des revêtements de polymères.

### Exemple 1 :

Une tôle non plaquée en alliage 6056 a été fabriquée par coulée d'une plaque en alliage contenant 0,91% de Si, 0,76% de Mg, 0,64% de Cu, 0,59% de Mn, 0,13% de Fe et 0,17% de Zn, scalpage, réchauffage à 530 °C, laminage à chaud au laminoir réversible puis au laminoir tandem jusqu'à une épaisseur de 4 mm, bobinage, et débitage de la bande en tôles. Les tôles ont été mises en solution (40 minutes à 550°C) puis trempées. Une partie des tôles a été soumise à un traitement de revenu T6 (4 h à 190°C). Les caractéristiques mécaniques statiques obtenues sont présentées au Tableau 1 :

**Tableau 1**

| | Sens TL | | | Sens L | | |
|---|---|---|---|---|---|---|
| | R_{p0.2} [MPa] | Rₘ [MPa] | A [%] | R_{p0.2} [MPa] | Rₘ [Mpa] | A [%] |
| Etat T4 | 218 | 308 | 20 | - | - | - |
| Etat T6 | 349 | 379 | 11 | 355 | 366 | 13,5 |

La vitesse de propagation de fissures da/dn a été mesurée selon la norme ASTM E647 pour R = 0,1 sur une éprouvette de type CCT de largeur W = 400 mm avec une longueur de fissure initiale 2aₒ = 4 mm, à une fréquence f= 3 Hz.
Les résultats sont rassemblés dans le tableau 2 :

**Tableau 2**

| ΔK [Mpa√m] | 10 | 20 | 30 | 40 | 50 |
|---|---|---|---|---|---|
| da/dn (sens T-L) [mm/cycle] | 1,7 x 10⁻⁴ | 1,2 x 10⁻³ | 5 x 10⁻³ | 1,4 x 10⁻² | - |
| da/dn (sens L-T) [mm/cycle] | 8 x 10⁻⁵ | 8 x 10⁻⁴ | 2,5 x 10⁻³ | 5 x 10⁻³ | - |

La ténacité en contrainte plane a été mesurée selon la norme ASTM E561 sur une éprouvette de type CCT de largeur W = 760 mm et de longueur de fissure initiale 2aₒ = 253 mm. L'essai permet de définir la courbe R du matériau, donnant la résistance à la déchirure K_{R} en fonction de l'extension de la fissure Δa. Les résultats sont rassemblés dans le Tableau 3.

**Tableau 3**

| Δa [mm] | 10 | 20 | 30 | 40 | 50 |
|---|---|---|---|---|---|
| K_{R}(sensT-L) [MPa√m] | 89 | 109 | 122 | 133 | 142 |
| K_{R}(sens L-T) [MPa√m] | 101 | 129 | 149 | 166 | 180 |

On peut ensuite calculer à partir de cette courbe, et selon la procédure indiquée par L. Schwarmann dans Aluminium, 1991, vol. 67, n° 5, p. 479, les ténacités apparente K_{C0} et effective K_{C} qui correspondent à la rupture d'une éprouvette virtuelle de type CCT de largeur W = 400 mm et de longueur de fissure initiale 2aₒ =133 mm. On trouve :
dans le sens T-L : K_{C0} = 93,2 MPa√m, K_{C} = 126,1 MPa√m
dans le sens L-T : K_{C0} = 114,1 MPa√m, K_{C} = 165 MPa√m

### Exemple 2 :

Une tôle en alliage 6056 plaquée sur les deux faces a été fabriquée par coulée d'une plaque en alliage contenant 0,85% de Si, 0,71% de Mg, 0,67% de Cu, 0,59% de Mn, 0,12% de Fe et 0,15% de Zn, scalpage, positionnement sur les deux faces de la plaque scalpée de tôles de couverture contenant 0,11% de Si, 100 µg/g de Mg, 28 µg/g de Cu, 145 µg/g de Mn, 0,22% de Fe et 0,50% de Zn. Après réchauffage à 530°C, cette plaque a été laminée à chaud au laminoir réversible puis au laminoir tandem jusqu'à une épaisseur de 4,5 mm. Après bobinage, la bande a été débitée en tôles. Les tôles ont été mises en solution (40 minutes à 550°C) puis trempées. Une partie des tôles a été soumise à un traitement de revenu T6 (4 h à 190°C). Le placage avait une épaisseur par face de 110 µm. La taille de grains dans le sens L dans l'âme à mi-épaisseur était de l'ordre de 335 µm à 375 µm.

Les caractéristiques mécaniques statiques obtenues sont présentées au tableau 4 :

**Tableau 4**

| | Sens TL | | | Sens L | | |
|---|---|---|---|---|---|---|
| | R_{p0.2} [MPa] | Rₘ [MPa] | A [%] | R_{p0.2} [MPa] | Rₘ [MPa] | A [%] |
| Etat T4 | 176 | 308 | 21,4 | - | - | - |
| Etat T6 | 346 | 384 | 10,6 | 353 | 370 | 12,5 |

La vitesse de propagation de fissures da/dn a été mesurée comme dans l'exemple 1. Les résultats sont rassemblés dans le tableau 5 (deux mesures) :

**Tableau 5**

| ΔK [Mpa√m] | 10 | 20 | 30 | 40 | 50 |
|---|---|---|---|---|---|
| da/dn (sens T-L) [mm/cycle] | 1,4 et 1,6 x 10⁻⁴ | 1,0 et 1,3 x 10⁻³ | 3,2 et 3,8 x 10⁻³ | 1,5 et 1,2 x 10⁻² | 4 et 2,7 x 10⁻² |
| da/dn (sens L-T) [mm/cycle] | 1,2 et 1,1 x 10⁻⁴ | 8,8 et 9,4 x 10⁻⁴ | 2,8 et 3,0 x 10⁻³ | 7 et 8 x 10⁻³ | 1,6 et 2,0 x 10⁻² |

La ténacité en contrainte plane a été mesurée comme dans l'exemple 1. Les résultats sont rassemblés dans le tableau 6.

**Tableau 6**

| Δa[mm] | 10 | 20 | 30 | 40 | 50 |
|---|---|---|---|---|---|
| K_{R}(sensT-L) [MPa√m] | 80 | 101 | 115 | 125 | 133 |
| K_{R}(sens L-T) [MPa√m] | 102 | 127 | 145 | 160 | 173 |

Sur la base du même calcul que dans l'exemple 1, on trouve pour les ténacités apparente et effective:
dans le sens T-L : K_{C0} = 87,6 MPa√m, K_{C} = 118,9 MPa√m
dans le sens L-T : K_{C0} = 111,3 MPa√m, K_{C} = 157,1 MPa√m

La comparaison de ces valeurs avec celles obtenues typiquement pour une tôle en alliage 2024-T351 plaqué, telle que celle mentionnée dans la demande de brevet FR 99-04685, tableau 7, exemple 3u :
dans le sens T-L : K_{C0 :} environ 78 MPa√m, K_{C :} environ 122 MPa√m
dans le sens L-T : K_{C0 :} environ 93 MPa√m, K_{C} : environ 140 MPa√m
souligne la bonne aptitude des tôles selon l'invention pour la fabrication d'éléments de fuselage pour aéronef.

Le potentiel de corrosion des tôles selon l'invention a été déterminé dans le placage et dans l'âme selon la norme ASTM G69 par rapport à une électrode au calomel saturé. Les résultats sont rassemblés dans le Tableau 7. Ils correspondent à trois points de mesure dans une zone rapprochée sur le même échantillon.

**Tableau 7**

| | Eo en mV / ECS | | | |
|---|---|---|---|---|
| Placage | - 834 | - 838 | - 836 | ΔE = 90 à 100 mV |
| Ame (surface) | - 740 | - 738 | - 738 | |
| Ame (coeur) | - 745 | - 748 | - 747 | |

### Exemple 3 :

Une tôle en alliage 6056 plaquée sur les deux faces a été fabriquée comme dans l'exemple 2. La composition chimique de l'âme était la suivante: 1,01% de Si, 0,71% de Mg, 0,67% de Cu, 0,55% de Mn, 0,14% de Fe et 0,15% de Zn. Par différence avec l'exemple 2, une homogénéisation (4 heures à 540°C et 24 h à 565°C) a été effectuée avant la mise en place des tôles de couverture. Le placage était le même que dans l'exemple 2, et avait la même épaisseur La taille de grains dans le sens L dans l'âme à mi-épaisseur était de 145 µm. De ce fait, cette tôle plaquée présente, après usinage chimique, une rugosité plus faible que la tôle selon l'exemple 2. Les caractéristiques mécaniques statiques à l'état T4 et T6 sont indiquées au tableau 8 :

**Tableau 8**

| | R_{0,2}(MPa) | Rₘ (MPa) | A (%) | R_{0,2} (MPa) | Rₘ(MPa) | A (%) |
|---|---|---|---|---|---|---|
| Sens | TL | TL | TL | L | L | L |
| T4 | 170 | 299 | 27,0 | | | |
| T6 | 346 | 380 | 11,3 | 359 | 376 | 12,0 |

La vitesse de propagation de fissures da/dn a été mesurée comme dans l'exemple 1. Les résultats sont rassemblés dans le tableau 9 :

**Tableau 9**

| ΔK [MPa√m] | 10 | 20 | 30 | 40 | 50 |
|---|---|---|---|---|---|
| da/dn (sens T-L) [mm/cycle] | 1,8 x 10⁻⁴ | 1,3 x 10⁻³ | 4,1 x 10⁻³ | 1,3 x 10⁻² | 2,8 x 10⁻² |
| da/dn (sens L-T) [mm/cycle] | 1,4 x 10⁻⁴ | 1,0 x 10⁻³ | 2,9 x 10⁻³ | 9,6 x 10⁻³ | 2,3 x 10⁻² |

La ténacité en contrainte plane a été mesurée comme dans l'exemple 1. Les résultats sont rassemblés dans le tableau 10 :

**Tableau 10**

| Δa[mm] | 10 | 20 | 30 | 40 | 50 |
|---|---|---|---|---|---|
| K_{R} (sens T-L) [MPa√m] | 90 | 109 | 121 | 130 | 137 |
| K_{R}(sens L-T) [MPa√m] | 93 | 118 | 136 | 150 | 164 |

Sur la base du même calcul que dans l'exemple 1, on trouve pour les ténacités apparente et effective:
dans le sens T-L : K_{C0} = 104,6 MPa√m, K_{C} = 151,7 MPa√m
dans le sens L-T : K_{C0} = 91,8 MPa√m, K_{C} = 119,7 MPa√m

### Exemple 4 :

On a préparé des coupes transversales polies de tôles plaquées :
(a) 2024 plaqué 1050, état T3
(b) 6056 plaqué, selon l'exemple 2, à l'état T4
(c) 6056 plaqué, selon l'exemple 2, à l'état T6

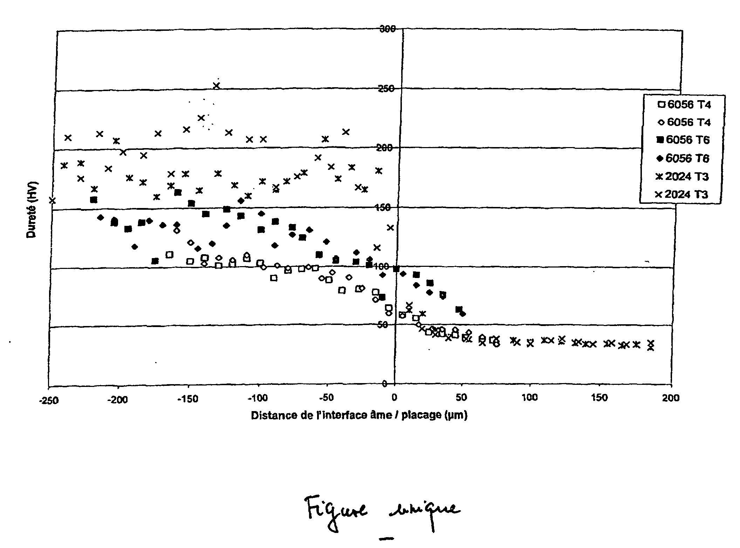

La microdureté Vickers a été mesurée dans le placage et dans l'âme sur une coupe polie, dans le sens TC-TL, à l'aide d'un microduromètre LECO M-400-G2 avec une charge de 5 g, un temps d'application de 10 s et une vitesse d'application de 60 µm/s. On a ainsi enregistré pour chaque échantillon deux courbes représentant la microdureté Vickers en fonction de la distance par rapport à l'interface entre âme et placage. Ces courbes sont représentées sur la figure unique.

On constate pour le 2024 plaqué une chute de dureté très brutale lorsque l'on passe de l'âme vers le placage. La tôle 6056 plaquée AlZn selon l'exemple 2, à l'état T4, montre une transition moins brusque à l'interface. Ceci semble indiquer l'existence d'une diffusion d'atomes de l'âme vers le placage.

Si, à l'état T4, la dureté du placage AlZn sur 6056 est du même ordre de grandeur que celle du 1050 sur 2024, on constate par contre un net durcissement du placage AlZn sur 6056 à l'état T6. Des observations en microscopie électronique à transmission montrent d'ailleurs de la précipitation durcissante, de la même nature que dans l'âme.

A l'état d'utilisation optimal (c'est-à-dire T6 pour une âme en 6056 et T3 ou T4 pour âme en 2024), la dureté du placage est plus grande pour le produit selon l'invention (6056 plaqué AlZn) que pour le produit standard selon l'art antérieur (2024 plaqué 1050). Cette amélioration de la dureté se traduit par une meilleure protection physique de l'âme et un abattement de la limite élastique R_{p0.2} moindre. Ce dernier aspect ressort aussi directement de la comparaison des valeurs de R_{p0.2} des exemples 1 (art antérieur : 6056 T6 non plaqué) et 2 (6056 plaqué AlZn selon l'invention) : on trouve au sens L une valeur de R_{p0.2} de 355 MPa pour la tôle non plaquée, et une valeur de 353 MPa pour la tôle plaquée : cet abattement de l'ordre de 1% est insignifiant. En revanche, pour le produit de référence selon l'art antérieur, 2024 T351 plaqué 1050, un abattement de 5 à 10% est couramment observé ; ceci ressort par exemple de l'article de R.J.H. Wanhill et al. « Modern Aluminium Sheet Alloys for Aerospace Applications », publié dans les Proceedings de «The 3^{rd} International Conference on Aluminium Alloys - Their Physical and Mechanical Properties », (ICAA 3) Atlanta, 1992, pp. 357-362.

### Exemple 5 :

Sur un laminoir à chaud expérimental, on a réalisé des éprouvettes d'une épaisseur totale de 2 mm, plaquées une face, l'épaisseur du placage étant 100 µm. Ces éprouvettes ont été traitées thermiquement à l'état T6, ce traitement comprenant une mise en solution d'une heure à 550°C et un revenu de quatre heures à 190°C.
On a mesuré les potentiels de corrosion dans l'âme et dans le placage selon la procédure décrite dans la norme ASTM G69.

On trouve ainsi pour une tôle 6056 plaquée 1050 (hors invention) une différence de potentiel de 20 mV, pour une tôle 6056 plaquée d'un alliage 7072 (hors invention, teneur en zinc de l'ordre de 1%) une différence de potentiel de 120 mV, et pour une tôle 6056 plaquée d'un alliage 1050 avec addition de 0,5% de zinc (selon l'invention) une différence de potentiel de 90 à 100 mV.

La tôle 6056 plaquée 1050 conduit donc à une protection cathodique trop faible et les deux autres tôles assurent une protection cathodique correcte ; la valeur de 90 à 100 mV étant généralement considérée comme préférable.

### Exemple 6 :

Une tôle en alliage 6056 (état T6) d'une épaisseur totale de 5 mm plaquée sur les deux faces a été fabriquée par laminage à chaud selon un procédé similaire à celui de l'exemple 3. La composition chimique de l'âme était la suivante : 0,88 % de Si, 0,75 % de Mg, 0,4 % de Cu, 0,61 % de Mn, 0,11 % de Fe et 0,15 % de Zn. L'une de faces était plaquée d'un alliage 4045 avec environ 10 % de Si ; l'épaisseur de ce placage était de 130 µm. L'autre face était plaquée d'un alliage de type AlZn contenant 0,14 % de Si, 0,35 % de Zn et 0,25 % de Fe ; l'épaisseur de ce placage était de 90 µm. Les caractéristiques mécaniques sont indiquées au tableau 11 :

**Tableau 11**

| | R_{0,2} (MPa) | Rₘ(MPa) | A (%) | R_{0,2} (MPa) | Rₘ (MPa) | A (%) |
|---|---|---|---|---|---|---|
| Sens | TL | TL | TL | L | L | L |
| T6 | 342 | 375 | 13.7 | 360 | 374 | 13.3 |

La vitesse de propagation de fissures da/dn a été mesurée comme dans l'exemple 1.
Les résultats sont rassemblés dans le tableau 12 :

**Tableau 12**

| ΔK [MPa√m] | 10 | 20 | 30 | 40 | 50 |
|---|---|---|---|---|---|
| da/dn (sens T-L) [mm/cycle] | 1.5 x 10⁻⁴ | 1.5 x 10⁻³ | 5 x 10⁻³ | 2 x 10⁻² | 4 x 10⁻² |
| da/dn (sens L-T) [mm/cycle] | 1.6 x 10⁻⁴ | 1.5 x 10⁻³ | 4 x 10⁻³ | 9 x 10⁻³ | 2 x 10⁻² |

Le potentiel de corrosion a été mesuré comme dans l'exemple 2 (moyenne de 3 mesures) :

| | |
|---|---|
| Placage en alliage de type AlZn | - 842 mV / ECS |
| Placage en alliage 4045 | - 792 mV / ECS |
| Ame (à coeur) | -733 mV / ECS |
| Ame (à 200 µm de la surface) | -735 mV / ECS |

On constate qu'il existe une différence de potentiel entre âme et placage sacrificiel (alliage de type AlZn) de l'ordre de 110mV.

### Exemple 7 :

Des tôles de différentes compositions et épaisseurs ont été fabriquées à l'état T6 conformément aux procédés décrits dans les exemples précédents. Les tôles sont plaquées (sauf la tôle issue de l'exemple 1) sur une ou deux faces par un alliage contenant 0.3 à 0.7% de zinc, jusqu'à 0.4% de fer, jusqu'à 0.25% de silicium et jusqu'à 0.10% de chacun des éléments cuivre, manganèse, magnésium, titane et vanadium. La composition chimique des alliages d'âme est indiquée au tableau 13. Les propriétés mécaniques statiques des tôles ont été mesurées à l'état T6. Pour permettre une comparaison plus significative de ces résultats, on a estimé les propriétés mécaniques de l'âme à partir de celles de la tôle plaquée et de l'épaisseur de placage, en considérant que le placage ne contribue pas à la résistance mécanique du produit plaqué ; cette estimation, donnée ici à titre d'illustration, ne prend donc pas en compte l'effet durcissant du placage démontré à l'exemple 4. Les résultats sont indiqués au tableau 14.

**Tableau 13**

| Réf. | Origine | Si | Cu | Mg | Mn | Fe | Somme [Si]+[Mg]+ 3 x [Cu] |
|---|---|---|---|---|---|---|---|
| 1 | - | 0.83 | 0.57 | 0.73 | 0.56 | 0.07 | 3.27 |
| 2 | - | 0.83 | 0.57 | 0.73 | 0.56 | 0.07 | 3.27 |
| 3 | - | 0.83 | 0.66 | 0.72 | 0.60 | 0.07 | 3.53 |
| 4 | - | 0.83 | 0.57 | 0.73 | 0.56 | 0.07 | 3.27 |
| 5 | - | 0.87 | 0.66 | 0.74 | 0.60 | 0.07 | 3.59 |
| 6 | Ex. 3 | 1.01 | 0.67 | 0.71 | 0.55 | 0.14 | 3.73 |
| 7 | Ex. 2 | 0.85 | 0.67 | 0.71 | 0.59 | 0.12 | 3.57 |
| 8 | - | 0.85 | 0.67 | 0.71 | 0.59 | 0.12 | 3.57 |
| 9 | Ex. 1 | 0.91 | 0.64 | 0.76h | 0.59 | 0.13 | 3.59 |

**Tableau 14**

| Réf. | Origine | Plac. (%) | Ep. (mm) | R_{0,2} (TL) (MPa) mesuré | Rₘ (TL) (MPa) mesuré | R_{0,2} (TL) (MPa) Estimé | Rₘ (TL) (MPa) estimé |
|---|---|---|---|---|---|---|---|
| 1 | - | 2.5 | 7 | 320 | 348 | 336 | 365 |
| 2 | - | 3.5 | 5 | 314 | 346 | 336 | 370 |
| 3 | - | 4 | 3.2 | 335 | 364 | 362 | 393 |
| 4 | - | 2.5 | 6 | 318 | 351 | 334 | 369 |
| 5 | - | 3 | 5 | 339 | 370 | 359 | 392 |
| 6 | Ex. 3 | 2 | 4.5 | 345 | 380 | 359 | 395 |
| 7 | Ex. 2 | 2 | 4.5 | 347 | 384 | 361 | 399 |
| 8 | - | 2 (une face) | 4.5 | 355 | 390 | 362 | 398 |
| 9 | Ex. 1 | 0 (nu) | 6 | 359 | 379 | 359 | 379 |

On constate que la résistance mécanique de l'âme augmente avec la somme ([Si]+[Mg]+3x[Cu]). On obtient une excellente résistance mécanique avec une somme ([Si]+[Mg]+3x[Cu]) supérieure à 3,50.

## Revendications

1. Tôle plaquée sur une ou deux faces, constituée d'une tôle d'âme en alliage de composition (% en poids) :
Si : 0,7 - 1,3 Mg : 0,6 - 1,2 (et de préférence 0,7 - 1,1)
Cu : 0,5 - 1,1 Mn : 0,15 - 1,0 (et de préférence 0,3 - 0,7)
Zn < 0,5 Fe < 0,5 (et de préférence < 0,3)
Zr < 0,2 Cr < 0,25 autres éléments < 0,05 chacun et < 0,15 au total, reste aluminium,
et d'un placage en alliage d'aluminium, sur au moins une face de la tôle, d'épaisseur comprise entre 1 à 15% (et de préférence 1,5 à 12%) de l'épaisseur totale, **caractérisée en ce que** ce placage est en alliage AlZn de composition (% en poids) :
Zn : 0,25 - 0,7 (et de préférence 0,3 - 0,6), Fe < 0,40 Si < 0,40 (et préférence < 0,25) Cu, Mn, Mg, V ou Ti < 0,10, autres éléments < 0,05 chacun et 0,15 au total, reste aluminium.

2. Tôle plaquée selon la revendication 1, **caractérisée en ce qu'**elle comporte un placage en alliage AlZn sur une face et sur l'autre face un deuxième alliage de placage ayant un point de fusion inférieur à celui de l'âme.

3. Tôle selon la revendication 2, **caractérisée en ce que** le deuxième alliage de placage est un alliage de type 4xxx, et de préférence un alliage 4043, 4045 ou 4047.

4. Tôle plaquée selon l'une des revendications 1 à 3, **caractérisée en ce que** la différence de potentiel entre l'âme et le placage en alliage AlZn est comprise entre 40 mV et 130 mV, de préférence entre 50 mV et 110 mV, et encore plus préférentiellement entre 60 mV et 100 mV.

5. Tôle selon l'une des revendications 1 à 4, **caractérisée en ce que** son épaisseur se situe entre 1 mm et 10 mm.

6. Tôle plaquée selon l'une des revendications 1 à 5, **caractérisée en ce que** la taille de grains sens L à mi-épaisseur dans l'âme est inférieure à 250 µm et préférentiellement inférieure à 180 µm.

7. Tôle plaquée selon l'une des revendications 1 à 6, **caractérisée en ce que** la somme (Si + Mg + 3Cu), dans laquelle les concentrations des éléments sont exprimées en % en poids, est supérieure à 3,50.

8. Elément de structure pour aéronef en tôles plaquées selon l'une quelconque des revendications 1 à 7.

9. Elément de structure selon la revendication 8, **caractérisé en ce qu'**au moins une partie des tôles plaquées a subi un usinage chimique.

10. Procédé de fabrication d'un élément de structure d'aéronef, comportant
a) la fabrication d'une tôle plaquée par laminage à chaud, constituée d'une tôle d'âme en alliage de composition (% en poids) :
Si : 0,7 - 1,3 Mg : 0,7 - 1,1 Cu : 0,5 - 1,1
Mn : 0,15 - 1,0 et de préférence 0,3 - 0,7
Zn < 0,5 Fe < 0,30 Zr < 0,20 Cr < 0,25
autres éléments < 0,05 chacun et < 0,15 au total, reste aluminium,
et d'un placage en alliage d'aluminium sur au moins une face, d'une épaisseur par face comprise entre 1 à 15% et de préférence 1,5 à 12% de l'épaisseur totale, ce placage consistant sur au moins une face en un alliage AlZn contenant de 0,3 à 0,7% de zinc, jusqu'à 0,40% de fer, jusqu'à 0,25% de silicium, jusqu'à 0,10% de chacun des éléments cuivre, manganèse, le magnésium, le titane, et le vanadium, autres éléments < 0,05 chacun et < 0,15% au total, reste aluminium, l'autre face pouvant être plaquée le cas échéant d'un deuxième alliage de placage, de préférentiellement un alliage de type 4000 ;
b) optionnellement une ou plusieurs passes de laminage à froid ;
c) une mise en solution suivie d'une trempe ;
d) optionnellement une ou plusieurs opérations de parachèvement tel que le défripage, le planage ou la traction contrôlée ;
e) optionnellement une mise en forme de la tôle ;
f) l'assemblage de l'élément de structure par rivetage de plusieurs tôles et soudage ou rivetage sur des raidisseurs ou cadres,
g) optionnellement le revenu de l'élément de structure.

11. Procédé selon la revendication 10, **caractérisé en ce qu'**il comporte, avant la mise en place du ou des placage(s), une homogénéisation de la plaque coulée en matériau d'âme

12. Procédé selon la revendication 11, **caractérisée en ce que** cette homogénéisation est faite en deux paliers.

13. Procédé selon la revendication 12, **caractérisé en ce que** le premier palier se situe entre 530°C et 550°C, pour une durée comprise entre 1 h et 8 h.

14. Procédé selon la revendication 12 ou 13, **caractérisé en ce que** le deuxième palier se situe entre 555°C et 575°C, pour une durée comprise entre 18 h et 36 h.

15. Procédé selon l'une des revendications 10 à 14, **caractérisé en ce qu'**il comporte un traitement de revenu effectué après la trempe, avant ou après la mise en forme, sur l'élément de structure assemblé.

16. Procédé selon la revendication 15, **caractérisé en ce que** le revenu est effectué à une température comprise entre 170°C et 200°C, pour une durée comprise entre 1 h et 10 h.

17. Procédé selon l'une des revendications 10 à 16, **caractérisé en ce que** l'assemblage est effectué par soudage par faisceau laser ou soudage par friction.

18. Procédé selon l'une des revendications 10 à 17, **caractérisée en ce que** le deuxième alliage de placage est un alliage 4043, 4045 ou 4047.

19. Panneau de fuselage d'avion réalisé à partir de tôles plaquées selon l'une quelconque des revendications 1 à 7, **caractérisé en ce que** les tôles sont assemblées au moins partiellement par soudage.

20. Panneau de fuselage selon la revendication 19, **caractérisé en ce que** l'assemblage est fait par soudage par laser ou soudage par friction.

## Patentansprüche

1. Plattiertes Blech auf einer oder zwei Seiten, bestehend aus einem Grundblech aus einer Legierung mit der Zusammensetzung (Gew.-%):
Si: 0,7 - 1,3 Mg: 0,6 - 1,2 (und vorzugsweise 0,7 - 1,1)
Cu: 0,5 - 1,1 Mn: 0,15 - 1,0 (und vorzugsweise 0,3 - 0,7)
Zn < 0,5 Fe < 0,5 (und vorzugsweise < 0,3)
Zr < 0,2 Cr < 0,25
weitere Elemente jeweils < 0,05 und insgesamt < 0,15, Rest Aluminium,
und einer Plattierung aus Aluminiumlegierung auf mindestens einer Seite des Bleches in einer Dicke zwischen 1 und 15 % (und vorzugsweise 1,5 und 12 %) der Gesamtdicke, **dadurch gekennzeichnet, dass** diese Plattierung aus AlZn-Legierung folgender Zusammensetzung (Gew.-%) besteht:
Zn: 0,25 - 0,7 (und vorzugsweise 0,3 - 0,6), Fe < 0,40, Si < 0,40 (und vorzugsweise < 0,25), Cu, Mn, Mg, V oder Ti < 0,10, weitere Elemente jeweils < 0,05 und insgesamt < 0,15, Rest Aluminium.

2. Plattiertes Blech nach Anspruch 1, **dadurch gekennzeichnet, dass** es eine Plattierung aus AlZn-Legierung auf einer Seite und auf der anderen Seite eine zweite Plattierungslegierung aufweist, die einen niedrigeren Schmelzpunkt als die Legierung des Grundbleches hat.

3. Blech nach Anspruch 2, **dadurch gekennzeichnet, dass** die zweite Plattierungslegierung eine Legierung vom Typ 4xxx und vorzugsweise eine Legierung 4043, 4045 oder 4047 ist.

4. Plattiertes Blech nach einem der Ansprüche 1 bis 3, **dadurch gekennzeichnet, dass** die Potentialdifferenz zwischen dem Grundblech und der Plattierung aus AlZn-Legierung zwischen 40 mV und 130 mV, bevorzugt zwischen 50 mV und 110 mV und noch bevorzugter zwischen 60 mV und 100 mV liegt.

5. Blech nach einem der Ansprüche 1 bis 4, **dadurch gekennzeichnet, dass** seine Dicke zwischen 1 mm und 10 mm liegt.

6. Plattiertes Blech nach einem der Ansprüche 1 bis 5, **dadurch gekennzeichnet, dass** die Korngröße in Längsrichtung in halber Dicke im Grundblech kleiner als 250 µm und vorzugsweise kleiner als 180 µm ist.

7. Plattiertes Blech nach einem der Ansprüche 1 bis 6, **dadurch gekennzeichnet, dass** die Summe (Si + Mg + 3Cu), bei der die Konzentrationen der Elemente in Gew.-% ausgedrückt sind, größer als 3,50 ist.

8. Flugzeugstrukturelement aus plattierten Blechen nach irgendeinem der Ansprüche 1 bis 7.

9. Strukturelement nach Anspruch 8, **dadurch gekennzeichnet, dass** mindestens ein Teil der plattierten Bleche chemisch bearbeitet wurde.

10. Verfahren zur Herstellung eines Flugzeugstrukturelementes, umfassend:
a) die Herstellung eines plattierten Bleches durch Warmwalzen, bestehend aus einem Grundblech aus einer Legierung mit der Zusammensetzung (Gew.-%):
Si: 0,7 - 1,3 Mg: 0.7 - 1,1 Cu: 0,5 - 1,1
Mn: 0,15 - 1,0 und vorzugsweise 0,3 - 0,7
Zn < 0,5 Fe < 0,30 Zr < 0,20 Cr < 0,25
weitere Elemente jeweils < 0,05 und insgesamt < 0,15, Rest Aluminium,
und einer Plattierung aus Aluminiumlegierung auf mindestens einer Seite in einer Dicke je Seite zwischen 1 und 15 % und vorzugsweise 1,5 und 12 % der Gesamtdicke, wobei diese Plattierung auf mindestens einer Seite aus einer AlZn-Legierung besteht, die 0,3 bis 0,7 % Zink, bis zu 0,40 % Eisen, bis zu 0,25 % Silizium, bis zu 0,10 % von jedem der Elemente Kupfer, Mangan, Magnesium, Titan und Vanadium enthält, weitere Elemente jeweils < 0,05 und insgesamt < 0,15, Rest Aluminium, die andere Seite gegebenenfalls mit einer zweiten Plattierungslegierung plattiert werden kann, vorzugsweise mit einer Legierung vom Typ 4000;
b) optional einen oder mehrere Kaltwalzstiche;
c) ein Lösungsglühen und anschließendes Abschrecken;
d) optional einen oder mehrere Zurichtungsvorgänge, wie z. B. Entknittem, Richten oder kontrolliertes Recken;
e) optional ein Formen des Bleches;
f) den Zusammenbau des Strukturelementes durch Vernieten mehrerer Bleche und Aufschweißen oder Aufnieten auf Aussteifungen oder Rahmen,
g) optional die Warmauslagerung des Strukturelementes.

11. Verfahren nach Anspruch 10, **dadurch gekennzeichnet, dass** es vor dem Aufbringen der Plattierung bzw. Plattierungen eine Homogenisierung des Walzbarrens aus dem Grundwerkstoff umfasst.

12. Verfahren nach Anspruch 11, **dadurch gekennzeichnet, dass** diese Homogenisierung in zwei Stufen erfolgt.

13. Verfahren nach Anspruch 12, **dadurch gekennzeichnet, dass** die erste Stufe zwischen 530°C und 550°C liegt, für eine Dauer zwischen 1 h und 8 h.

14. Verfahren nach Anspruch 12 oder 13, **dadurch gekennzeichnet, dass** die zweite Stufe zwischen 555°C und 575°C liegt, für eine Dauer zwischen 18 h und 36 h.

15. Verfahren nach einem der Ansprüche 10 bis 14, **dadurch gekennzeichnet, dass** es eine Warmauslagerungsbehandlung umfasst, die nach dem Abschrecken vor oder nach dem Formen an dem zusammengebauten Strukturelement durchgeführt wird.

16. Verfahren nach Anspruch 15, **dadurch gekennzeichnet, dass** die Warmauslagerung bei einer Temperatur zwischen 170°C und 200°C durchgeführt wird, für eine Dauer zwischen 1 h und 10 h.

17. Verfahren nach einem der Ansprüche 10 bis 16, **dadurch gekennzeichnet, dass** der Zusammenbau durch Laserstrahlschweißen oder Reibschweißen erfolgt.

18. Verfahren nach einem der Ansprüche 10 bis 17, **dadurch gekennzeichnet, dass** die zweite Plattierungslegierung eine Legierung 4043, 4045 oder 4047 ist.

19. Flugzeugrumpfplatte, hergestellt aus plattierten Blechen nach irgendeinem der Ansprüche 1 bis 7, **dadurch gekennzeichnet, dass** die Bleche zumindest partiell miteinander verschweißt sind.

20. Rumpfplatte nach Anspruch 19, **dadurch gekennzeichnet, dass** der Zusammenbau durch Laserstrahlschweißen oder Reibschweißen erfolgt.

## Claims

1. Sheet clad one or two surfaces, made up of a core sheet in an alloy having the composition (% by weight):
Si: 0.7 - 1.3, Mg: 0.6 - 1.2 (preferably 0.7 - 1.1), Cu: 0.5 - 1.1, Mn: 0.15 - 1.0 (preferably 0.3 - 0.7),Zn < 0.5, Fe < 0.5 (preferably < 0,3), Zr < 0.2, Cr < 0.25, other elements < 0.05 each and < 0.15 total, the remainder aluminium,
and of cladding in aluminium alloy on at least one surface of the sheet, having a thickness of between 1 and 15 % (and preferably 1.5 to 12 %) of the total thickness, **characterized in that** this cladding is in AlZn alloy having the composition (% by weight):
Zn: 0.25 - 0.7 (preferably 0.3 - 0.6), Fe < 0.40 Si < 0.40 (preferably < 0.25), Cu, Mn, Mg, V or Ti < 0.10, other elements < 0,05 each and 0.15 total, the remainder aluminium.

2. Clad sheet according to claim 1, **characterized in that** it comprises cladding in AlZn alloy on one surface and on the other surface a second cladding alloy whose melting point is lower than the core melting point.

3. Sheet according to claim 2, **characterized in that** the second cladding alloy is an alloy of the 4xxx series, preferably a 4043, 4045 or 4047 alloy.

4. Clad sheet according to any of claims 1 to 3, **characterized in that** the difference in potential between the core and the AlZn alloy cladding lies between 40 mV and 130 mV, preferably between 50 mV and 110 mV, and further preferably between 60 mV and 100 mV.

5. Sheet according to any of claims 1 to 4, **characterized in that** its thickness is between 1 mm and 10 mm.

6. Clad sheet according to any of claims 1 to 5, **characterized in that** the grain size in direction L at mid-thickness within the core is less than 250 µm and preferably less than 180 µm.

7. Clad sheet according to any of claim 1 to 6, wherein the sum (Si + Mg + 3Cu) is higher than 3.50 (in % by weight).

8. Aircraft structural part in clad sheet according to any of claims 1 to 7.

9. Structural part according to claim 7, **characterized in that** at least some of the clad sheet has been subjected to chemical polishing.

10. Process for manufacturing an aircraft structural part, comprising:
a) the production of a clad sheet by hot rolling, formed of a core sheet in an alloy having the composition (% by weight):
Si: 0.7 - 1.3, Mg: 0.7 - 1.1, Cu: 0.5- 1.1, Mn: 0.15 - 1.0 and preferably 0.3 - 0.7, Zn < 0.5 ,Fe < 0.30, Zr < 0.20, Cr < 0.25, other elements < 0.05 each and < 0.15 total, the remainder aluminium,
and of a cladding in aluminium alloy on at least one surface, having a thickness per surface of between 1 to 15 % and preferably 1.5 to 12 % of the total thickness, this cladding consisting on at least one surface of an AlZn alloy containing from 0.3 to 0.7 % zinc, up to 0.40 % iron, up to 0.25 % de silicon, up to 0.10 % of each of the elements copper, manganese, magnesium, titanium, and vanadium, other elements < 0.05 each and < 0.15% total, the remainder aluminium, the other surface possibly being clad with a second cladding alloy, preferably an alloy of the 4000 series;
b) optionally one or more cold rolling passes;
c) solution heat treatment followed by quenching;
d) optionally one or more finishing operations such as crease recovery, roller levelling or controlled stretching.
e) optional sheet forming;
f) assembly of the structural part by riveting several sheets and welding or riveting on stiffeners or frames,
g) optional artificial ageing of the structural part.

11. Process according to claim 10, **characterized in that**, before application of the cladding, it comprises homogenisation of the rolling ingot for the core material.

12. Process according to claim 11, **characterized in that** this homogenisation is conducted in two steps.

13. Process according to claim 12, **characterized in that** the first step is conducted between 530°C and 550°C, for a period of between 1 h and 8 h.

14. Process according to claim 12 or 13, **characterized in that** the second stepis conducted between 555°C and 575°C, for a period of between 18 h and 36 h.

15. Process according to any of claims 10 to 14, **characterized in that** it comprises artificial ageing treatment of the assembled structural part conducted after quenching, before or after forming.

16. Process according to claim 15, **characterized in that** artificial ageing is conducted at a temperature of between 170°C and 200°C, for a period of between 1 h and 10 h.

17. Process according to any of claims 10 to 16, **characterized in that** the assembly is made by welding using laser beam or friction welding.

18. Process according to any of claims 10 to 17, **characterized in that** the second cladding alloy is a 4043, 4045 or 4047 alloy.

19. Airplane fuselage panel made from clad sheet according to any of claims 1 to 7, **characterized in that** the sheets are assembled at least in part by welding.

20. Fuselage panel according to claim 19, **characterized in that** assembly is made by laser welding or friction welding.
